# NEW EUROPEAN PATENT SPECIFICATION

(11) **EP 0 666 691 B2**
(45) Date of publication and mention of the opposition decision: **07.05.2008**
(45) Mention of the grant of the patent: 06.09.2000
(21) Application number: 95830032.9
(22) Date of filing: 07.02.1995
(51) Int. Cl.: H04N 5/44, H04N 5/50

(54) **Automatic identification and memorisation device of television stations**
Automatische Identifizierung und Einrichtung zum Abspeichern von Fernsehkanälen
Identification automatique et dispositif de stockage de canaux de télévision

(30) Priority: 08.02.1994 IT RM940057
(43) Date of publication of application: 09.08.1995
(73) Proprietor: EDICO S.r.l., 00196 Roma (IT)
(72) Inventor: D'Errico, Federico, I-00186 Roma (IT)
(74) Representative: Eisenführ, Speiser & Partner

(56) References cited:
- EP-A- 0 307 660
- EP-A- 0 373 297
- EP-A- 0 486 988
- EP-A- 0 529 340
- EP-A- 0 561 189
- EP-A- 0 567 168
- EP-A- 0 577 283
- EP-A- 0 589 369
- GB-A- 2 223 899
- IEEE TRANSACTIONS ON CONSUMER ELECTRONICS, vol. 38, no. 3, 30 August 1992 NEW YORK US, pages 288-295, XP 000311856 JAMES S. 'NEW DEVICES FOR VCR CONTROL USING TELETEXT SERVICES'
- Funkschau 22/1992, pages 44-46; Dietmar Lerch:'ATS euro plus, Keine Probleme mit der Sendersuche'
- IEEE TRANSACTIONS ON CONSUMER ELECTRONICS, VOL. 38, NO. 3, 30 August 1992, NEW YORK, US, pages 288-295, XP 000311856; S. JAMES:'NEW DEVICES FOR VCR CONTROL USING TELETEXT SERVICES'
- Preliminary Specification for Domestic Programme Delivery, EBU Document GT V2 488 rev. June 1988
- Specification of the Domestic Video Programme Delivery Control System (PDC), EBU Document SPB 459 rev., May 1989
- Broadcast Teletext Specification, September 1976
- Elektronik Fachbildung Kommunikationselektronik 2 Radio-/Fernseh/Funktechnik, Edition 1, 1992, Westermann schulbuchverlag; cover page, imprint and pages 296-297

## Description

The present invention refers to an identification and memorisation device of television stations, in particular apt for a television signals receiver, comprising control means that automatically provide to identify said television stations and to memorise them in an established order, independent from the transmission frequency of the same.

it is known from American patent application n. 3,882,400 a radio-receiver that can search all receivable stations and memorise them automatically in a suitable memory, as they are found; the broadcasting stations are therefore memorised in increased order of transmission frequency.

From the Italian patent n. 1.107.168 a receiver of television signals is known, equipped with broadcaster selection means and with memory means, in which the user can manually memorise a certain number of received television broadcasters, in the order that he prefers.

it is furthermore known from European patent application n. 04869A8 a selection and memorisation device of radioelectric signals in which control means are provided for automatically identifying sources of said signals and to memorise them in an established order.

Said device provides to utilise broadcaster identification signals inserted from the transmission side according to appropriate norms, such as the French DI-DON ANTIOPE, the German VP.S., or E.B.U norms that provide to insert broadcaster identification signals in determined lines of the teletext signal.

The situation however is such that, though the majority of broadcasting stations insert an identification in the signal, however they have not reached an agreement on using the same norm; for example white in Germany the aforementioned VPS norm is used, in Italy and in other European countries it is not utilised, while other E.B.U. norms are utilised.

it is known from IEEE Transactions on Consumer Electronics, vol. 38, No. 3,30, August 1992. New York, pages 288-295, James S. "New devices for VCR control using teletext services", a decoder for VCR control wherein a control system is provided in order to decide when to switch the decoder between teletext and VPS modes. The decision is taken checking whether the received synch word is a teletext framing code (27 Hex) or a VPS start code (9951 Hex).

The purpose of the present invention is that of indicating how it is possible to realise an Identification and memorisation device of television stations in particular apt for a television signals receiver, that is able to automatically carry out such operations if not in all, at least in the majority of cases of which an identification is effectively inserted in the transmitted signal.

For reaching such purpose the subject of the present invention is an identification and memorisation device of television stations having the characteristics according to the attached claim 1. Preferred forms of realisation are described in the sub-claims.

Further characteristics and advantages of the present invention will result in being clear from the following description and from the annexed drawings, supplied purely as an explanatory and non-limiting example, wherein:
- figure 1 represents the block diagram of a part of the circuit of a television signals receiver incorporating the device according to the invention;
- figure 2 represents the block diagram of a part of the logic control circuit of the apparatus of figure 1.

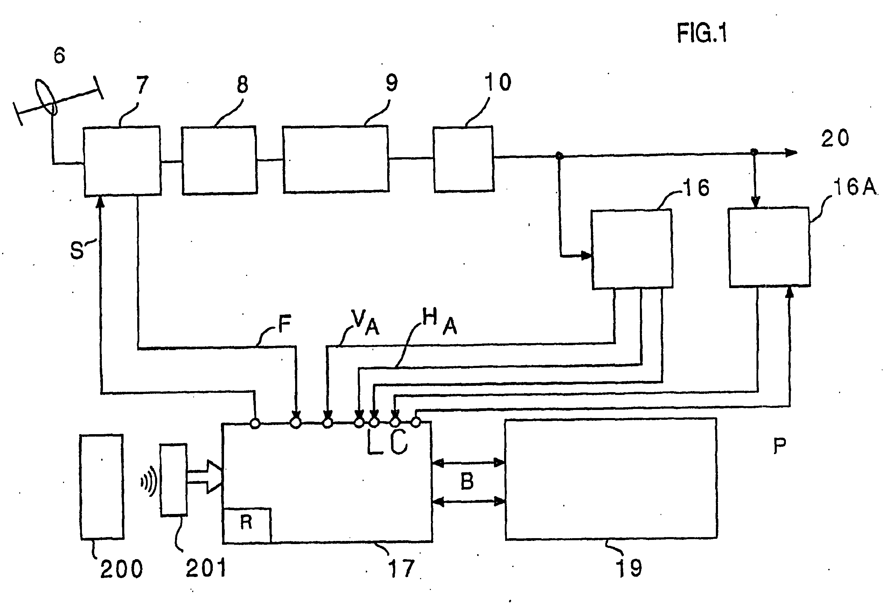

Figure 1. in which the blocks diagram of a part, of the circuit of a television signals receiver incorporating the device according to invention is represented, reference number 6 indicates the receiving antenna; number 7 indicates the tuner, that is supposedly of the type known with the name "frequency synthesis", and that serves to select and correctly tune a television signal picked up by the antenna 6.

Reference number 8 indicates, In the same figure, the amplifier of the intermediate frequency signal; number 9 indicates the video detection circuit and the number 10 a preamplifier of the detected video signal.

Reference number 16 indicates a circuitry block that generates in a known way synchronism signals, vertical and horizontal, starting from appropriate impulses contained in the preamplified video signal, indicated with reference number 20.

The block 16 also contains a known coincidence circuit, that verifies whether the signal in arrival is in synchronism with the locally produced deflection signals, in such case generating a suitable coincidence signal, that reaches to a terminal, indicated with C, of the successive circuitry, block 17, that is a control circuit, described more in detail in the following.

Reference number 16A indicates another circuitry block, that has the function of decoding the teletext signal present in the detected video signal 20.

The block 16A, once decoded the teletext signal, also provides to extract the broadcaster identification and to send it to the terminal L of the block 17; block 16A is programmed initially by the control circuit 17 to search the identification according to that provided by the document of the E.B.U. SPB 459; however it could also or rather be programmed to search the identfication according to document EBU known as "interim Technical Document SPB 492".

According to that provided by this document, the identification is inserted in the transmitted television signal using the so called 8/30 packet; or it is inserted in line 30 of the teletext signal, that is a so called "ghost row", transmitted about once any second; according to the cited E.B.U. document, the identification consists In a permanent code that defines in an univocal way the broadcaster, and is contained in the bytes 13-14 of the aforementioned packet

The signal 20 proceeds towards the amplifier or final video amplifiers (not shown in the figure), that apply it to the display system, usually a picture-tube.

Reference number 200 indicates a remote control signals transmitter, for example of the usual infrared rays type; such transmitter contains a plurality of command buttons (for simplicity not represented in the figure), from among which a button M may be provided for the beginning of the search and automatic memorisation operation of receivable signals, in an established order, for example that being statistically more common among users, tied to the signal source; a particularly advantageous solution may be that of choosing the same order adopted, in that zone, by automatic registration systems (for example the so called "Show View").

Reference number 201 indicates the receiver of remote control signals; it is coupled to the control circuit 17.

To circuit 17 also arrive the vertical synchronism VA and horizontal HA, and coincidence C signals, coming from circuit 16, and a frequency signal F coming from the tuner 7; from circuit 17 a tuning control signal S,departs that reaches the tuner 7.

Furthermore the encoded signal L coming from circuit 16A, that contains the broadcaster identification, reaches the circuit 17. The circuit 17 provides to decode said identification; in the case wherein the signal does not contain an identification, the circuit 17, according to the invention, commands the circuit 16A, through the connection P, to search for the identification elsewhere, for example in line 0 of the teletext signal.

The circuit 16A, once received the command signal P, provides to search the identification in the zero line of the teletext signal, where some broadcasters, that do not utilise the 8/30 packet, clearly write their name.

Reference number 19 indicates a read and write memory, of the non volatile type; such memory is connected to the circuit 17 by means of a bi-directional "bus" B and serves to memorise in a known way the tuning information relative to a plurality of receivable television stations.

The control circuit 17 is a logic circuit, for example a microprocessor, containing or associated to a read only memory R, in which a series of operative instructions and data are memorised; such data includes:
- a plurality of rules for searching the identification of broadcasted stations, namely 8/30 packet format 1; 8130 packet format 2; line 16-VPS; line 0; and
- a rule for storing in the memory 19 the tuning information relative to stations thus identified in an established order depending in fact on the identification.

Clearly the contents of such ROM is factory programmed, where the television signals receiver is built and can, if necessary, contain a plurality of rules, that can then be selected depending of the location in which the apparatus is utilised.

The circuit 17 manages the functioning of the receiver; decodes commands sent by the user by way of the remote control 200; provides to tune the receivable television signals through the antenna 6 and the tuner 7; provides to memorise the tuning information rotative to such signals and to recall it, if necessary, for providing to tune once again a signal preferred by the user.

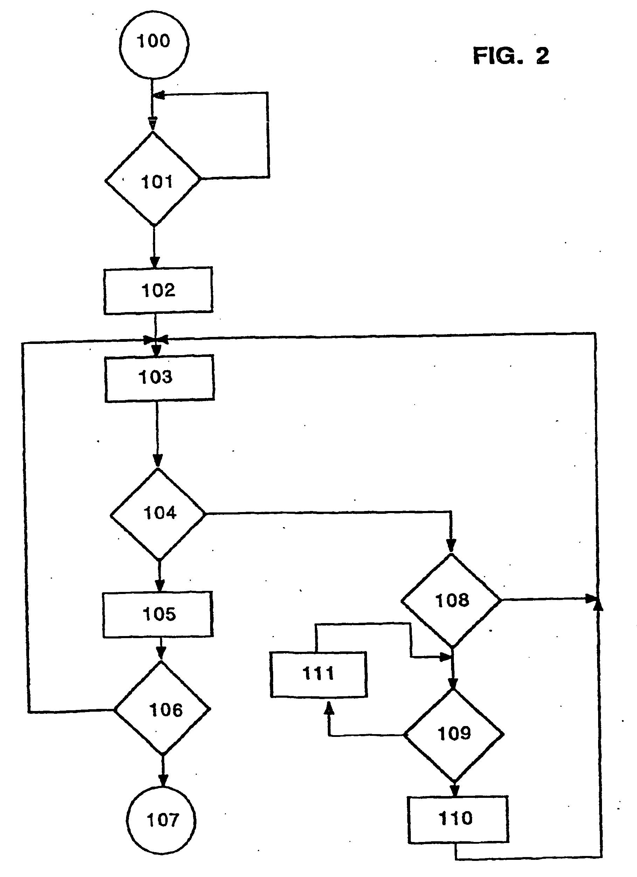

in figure 2 the block diagram of a part of the logic control circuit of the apparatus of figure 1 is represented; such circuit, that it is incorporated in the block indicated in figure 1 with number 17, may be indifferently realised with the wired logic system or, as more usual, with the programmed logic system, i.e. utilising a microprocessor; in that case the relative programming instructions are contained in the memory R.

In figure 2 the part of the logic circuit characteristic of the invention is represented.

Block 100 is the starting block of the operation of searching, identification and memorisation of signals; block 100 passes the control to block 101.

The block 101 is a control block; it verifies whether button M has been pressed on the remote control 200, corresponding to the search and memorisation command of receivable signals; in the affirmative case control passes to block 102; in the negative case control passes back to block 101 (in all control blocks, recognisable by their diamond shape, the lower exit is the YES exit, the lateral exit is the NO exit).

Block 102 provides to initialise parameters for the search of broadcasters, weighting the index range G = 1 and the index of the frequency divider N = V1, i. e. to the initial rate of the range 1. As is known the frequency divider represents the fundamental part of frequency synthesis tuning systems. The control now passes to block 103.

Block 103 provides to increase the frequency division index N of an established fixed quantity (N = N + I) and passes the control to block 104.

The increase I may be equal to 1 if it is desired to explore the range with equal steps to the fine resolution of the system (in usual televisions such fine resolution is equal to 50 or to 62,5 KHz); alternatively the increase may be equal to more steps (I = 2, 1 = 3, etc.) if one accepts to explore the range with a greater step. A fast system may be to explore the range of channel step, in union eventually to an AFC system (automatic tune).

Block 104 is a control block; it controls whether the end of the range has been reached (confronting the number N with the range limit contained in the memory R); in the affirmative case control passes to block 105; in the negative case control passes to block 108.

Block 105 provides to increase the range (G = G +1) and to initialise in correspondence the number N (N = Vg); control is then passed to block 106.

Block 106 is a control block; it controls whether the end of the exploration (G = 4) has been reached; in the affirmative case control passes to the block 107; in the negative case control passes back to block 103.

Block 107 is the final block of the search and memorisation operation of receivable signals; control can pass back to block 100 or to another suitable block.

Block 108 is a control block; it controls whether a valid signal has been tuned; the validity of the signal is normally valued based on the fact that the signal C of the comparator is positive; in the affirmative case control passes to block 109; in the negative case control passes back to block 103 Block 109 provides to read the identification.6ode.L; if it is valid control passes to block 110; on the contrary control passes to block 111.

Block 110 reads in the memory R the cell in which the memory 19 has to memorise the tuning information relative to such broadcaster (numbers G and N plus eventually the identification code); provides therefore the physical memorisation (placing the memory in WRITE, selects the address read in R, memorises the information, increasing the address in tum, places the memory back to in READ); control passes back to block. 103.

The block 111 emits the command P for further searches, according to a different rule, for the circuit 16A, and returns the control back to block 109.

For speeding up the search of broadcasting stations a preferred solution is that of sweeping the bands and memorising the broadcasters in the order in which they there are found; successively one examines the list and verifies, which of memorised stations have a label; in a third phase the identified broadcasters are placed in a chosen order.

The memorisation of information in the memory 19 takes place in a logical-intuitive order for aiding the user and based on the buttons of the remote control (equivalent to the memory positions) to which the receivable broadcasters are normally associated by the users: for example in Italy the signal of RAI 1 will be memorised as program n. 1; the signal of RAI 2 will be memorised as program n. 2; the signal of RAI 3 will be memorised as program n. 3; the Rete 4 signal will be memorised as program n. 4; the Canale 5 signal will be memorised as program n. 5; the Italia 1 signal Will, be memorised as program n. 6;the Italia 7 signal will be memorised as program n. 7; the signal of the Telemontecarlo will be memorised as program n. 8; etc.

Because in another country the criteria used in Italy may be without sense, It is possible memorise in the memory R other rules or memorisation criterias; it is possible to provide command means by means of which the installer or the user can choose the most convenient between such plurality of memorisation rules.

Another way of choosing the criteria Is, as already said, that to arranging the sequence of programs as that of the encoded programming system for video recorders, also known with the trade name "Show View".

From the given description the characteristics of the device subject of the present invention present are clear, as are clear its advantages.

In particular the device according to the invention allows to automatically identify the television stations received, and to memorise them in an established order, if not in all, at least in the majority of cases wherein an identification is effectively inserted in the transmitted signal, even if said identification is inserted in different positions of the signal.

Such device may naturally be adopted, both in televisions, and In video recorders.

It is clear that numerous variations can be introduced to the device subject of the present invention, without departing from the novelty principles inherent in the innovative idea, as it is clear that in the practical realisation of the invention the materials and the forms of the illustrated details may be different, and the same can be replaced with of technically equivalent elements.

A possible variation could for example provide that after a first and a second unsuccessful attempt, the device searches for the identification in a third position of the received signal, different from those of the two first attempts; such third position could for example be the television line 16 where the identification label according to system VPS is contained; or also the corresponding position according to the norm EBU, 8/30 packet format 2.

Another possible variation consists in providing that, after having memorised all stations equipped with identification, the others are memorised; in frequency order, in the eventual memory positions remaining empty; or that are memorised before those equipped with teletext and then the others.

A third variation could consist in utilising the broadcasters memorised for creating a memory map, to display on the screen upon request of the user.

## Claims

1. Identification and memorisation device of television stations, in particular for a television signal receiver, comprising control means (17) that automatically identify said television stations and memorise them in an established order, independent from the transmission frequency of the same, **characterised in that** said device has a memory (R) wherein a plurality of different rules for identifying said stations are memorised, namely 8/30 packet format 1; 8/30 packet format 2; line 16-VPS; line 0 of a teletext signal, and logic control circuit means (17) for executing in succession a plurality of identification attempts and by
- performing a first identification attempt to identify the received station, by searching and decoding an identification (L) inserted in the television signal, by examining a first determined position of the transmitted signal, according to a first of said memorised rules,
- and, when the said first identification attempt is unsuccessful performing at least a second identification attempt to identify said received station, by searching and decoding an identification inserted in the television signal, by examining a second determined position of the transmitted signal which is different from said first determined position, according to a second of said memorised rules.

2. identification and memorisation device of television stations, according to claim 1, **characterised in that** control means (17) are provided, which, in reply to a specific command, proceed to:
begin a searching operation of the receivable broadcasting stations;
- tune one of said stations;
- search and decode an identification (L) inserted in the transmitted television signal by said broadcaster, examining a first determined position, line 30, of the transmitted signal, where, according to a first memorised determined norm, SPB 459, SPB 492, it should find said identification (L);
- verify the validity of said identification:
**-** in the affirmative case, memorise the tuning information of said station in a determined position of memory reserved for said identification station;
- in the negative case search and decode the identification examining a second determined position, line 0, of the transmitted teletext signal, where according to a second determined norm said identification (L) should be found.

3. identification and memorisation device of television stations, according to claim 1, **characterised in that** control means (17) are provided, which, in reply to a specific command, proceed to:
- begin a searching operation of the receivable broadcasting stations;
- tune one of said stations;
- search and decode an identification (L) inserted in the transmitted television signal by said broadcaster, examining a first determined position, line 30, of the transmitted signal, where, according to a first memorised determined norm, such as SPB 459, SPB 492, it should find said identification (L) and verify the validity of said identification;
- in the affirmative case, memorise the tuning information of said station in a determined position of memory reserved for said identified station;
- in the negative case search and decode the identification examining a second determined position, line 0, of the transmitted teletext signal, where according to a second determined norm said identification (L) should be found and verify the validity.

4. Identification and memorisation device of television stations, according to claim 2 or 3. **characterised in that** said control means (17), for carrying out the identification of said sources, proceed to search and decode an identification (L) inserted in the transmitted television signal, above all examining the teletext signal of the transmitted television signal.

5. Identification and memorisation device of television stations, according to claim 4, **characterised in that** said control means (17), for carrying out the identification of said sources, proceed to search and decode an identification (L) inserted in line 30 of the teletext signal of the transmitted television signal.

6. identification and memorisation device of television stations, according to claim 5, **characterised in that** said control means (17), for carrying out the identification of said sources, proceed to search and decode an identification (L) inserted in line 0 of the teletext signal of the transmitted television signal.

7. Identification and memorisation device of television stations, according to claim 2 or 3, **characterised in that** said control means (17), for carrying out the identification of said sources, proceed to search and decode an identification (L) inserted in the transmitted television signal, according to the document of the E.B.U. SPB 459.

8. Identification and memorisation device of television stations, according to claim 7, **characterised in that** said control means (17), for carrying out the Identification of said sources, proceed to search and decode an identification (L) inserted in the transmitted television signal making use of the so called 8/30 packet

9. Identification and memorisation device of television stations, according to claim 8, **characterised in that** said control means (17), for carrying out the identification of said sources, proceed to search and decode an identification (L) inserted in the transmitted television signal making use of the so called 8/30 packet format 1.

10. Identification and memorisation device of television stations, according to claim 6, **characterised in that** said control means (17), for carrying out the identification of said sources, proceed to search and decode an identification (L) inserted in a different position of the received television signal, in particular in line 16, VPS, of the transmitted television signal or in the position corresponding to the norm EBU packet 8/30 format 2.

11. Identification and memorisation device of television stations, according to claim 1, **characterised in that** said order of established memorisation is contained in a read only memory (R) contained in the device.

12. identification and memorisation device of television stations, according to claim 11, **characterised in that** said order of established memorisation is one of a plurality of different orders of memorisation, contained in said read only memory (R).

13. Identification and memorisation device of television stations, according to claim 12, **characterised in that** said order of established memorisation is selected from among said plurality of different orders of memorisation, contained in said read only memory (R) by means of an appropriate command means.

14. identification and memorisation device of television stations, according to claim 12, **characterised in that** said order of established memorisation corresponds to that, defined for the zone in which the device is used, of the coded programming system for video recorders.

15. Identification and memorisation device of television stations, according to claim 6, **characterised in that** said control means (17), after having memorised all the stations having an identification, proceed to memorise the other receivable stations, in the frequency order, in the eventual memory positions remaining empty, in particular giving preference to those equipped with teletext.

16. Identification and memorisation device of television stations, according to claim 6, **characterised in that** said control means (17), after having memorised all the stations, proceed to create a memory map, to display on the screen upon request by the user.

17. Receiver of television signals comprising an identification and memorisation device of television stations, according to one or more of the previous claims.

18. Video recorder comprising an identification and memorisation device of television stations, according to one or more of the previous claims from 1 to 16.

## Patentansprüche

1. Identifikations- und Speicherungsvorrichtung von Fernsehstationen, insbesondere für einen Fernsehsignalempfänger, mit Steuermitteln (17), die automatisch die Fernsehstationen identifizieren und sie in einer aufgestellten Ordnung speichern, unabhängig von der Übertragungsfrequenz derselben,
**dadurch gekennzeichnet, dass** die Vorrichtung einen Speicher (R) aufweist, in welchem eine Anzahl verschiedener Regeln zum Identifizieren der Stationen gespeichert ist, nämlich 8/30-Paketformat 1; 8/30-Paketformat 2; Zeile 16-VPS; Zeile 0 von einem Teletext-Signal, und Logiksteuerschaltungsmittel (17) zum nacheinander Ausführen einer Anzahl von Identifikationsversuchen durch
- Durchführen eines ersten Identifikationsversuchs, um die empfangene Station zu identifizieren, durch Suchen und Decodieren einer Identifikation (L), die in das Fernsehsignal eingefügt ist, durch Prüfen einer ersten bestimmten Position des übertragenen Signals, gemäß einer ersten der gespeicherten Regeln,
- und, wenn der erste Identifikationsversuch erfolglos ist, Durchführen mindestens eines zweiten Identifikationsversuchs, um die besagte empfangene Station zu identifizieren, durch Suchen und Decodieren einer Identifikation, die in das Fernsehsignal eingefügt ist, durch Prüfen einer zweiten bestimmten Position des übertragenen Signals, welche verschieden ist von der ersten bestimmten Position, gemäß einer zweiten der gespeicherten Regeln.

2. Identifikations- und Speicherungsvorrichtung von Fernsehstationen gemäß Anspruch 1,
**dadurch gekennzeichnet, dass** Steuermittel (17) vorgesehen sind, welche in Antwort auf einen spezifischen Befehl, voranschreiten mit:
- Beginnen einer Suchoperation der empfangbaren Sendestationen;
- Einstellen einer der Stationen;
- Suchen und Decodieren einer Identifikation (L), die in das übertragene Fernsehsignal durch den Sender eingefügt ist, Prüfen einer ersten bestimmten Position, Zeile 30, des übertragenen Signals, wo, entsprechend einer ersten gespeicherten bestimmten Norm SPB 459, SPB 492, es die Identifikation finden sollte;
- Überprüfen der Validität der Identifikation;
- im Bestätigungsfall, Speichern der eingestellten Information der Station in einer bestimmten Position des Speichers, die für die Identifikationsstation reserviert ist;
- im negativen Fall, Suchen und Decodieren der Identifikation, wobei eine zweite bestimmte Position, Zeile 0, des übertragenen Teletext-Signals geprüft wird, wo entsprechend einer zweiten bestimmten Norm die Identifikation (L) gefunden werden sollte;

3. Identifikations- und Speicherungsvorrichtung von Fernsehstationen gemäß Anspruch 1,
**dadurch gekennzeichnet, dass** Steuermittel (17) vorgesehen sind, welche, in Antwort auf einen spezifischen Befehl, voranschreiten mit:
- Beginnen einer Suchoperation der empfangbaren Sendestationen;
- Einstellen einer der Stationen;
- Suchen und Decodieren einer identifikation (L), die in das übertragene Fernsehsignal durch den Sender eingefügt ist, Prüfen einer ersten bestimmten Position, Zeile 30, des übertragenen Signals, wo, gemäß einer ersten gespeicherten bestimmten Norm, wie z. B. SPB 459, SPB 492, es die Identifikation (L) finden sollte, und Überprüfen der Validität der Identifikation;
- im Bestätigungsfall, Speichern der Einstellungsinformation der Station in einer bestimmten Speicherposition, die für die identifizierte Station reserviert ist;
- im negativen Fall, Suchen und Decodieren der Identifikation, wobei eine zweite bestimmte Position geprüft wird, Zeile 0, des übertragenen Teletext-Signals, wo gemäß einer zweiten bestimmten Norm die Identifikation (L) gefunden werden sollte, und Verifizieren der Validität.

4. Identifikations- und Speicherungsvorrichtung von Fernsehstationen gemäß Anspruch 2 oder 3,
**dadurch gekennzeichnet, dass** die Steuermittel (17) zum Ausführen der Identifikation der Quellen mit Suchen und Decodieren einer Identifikation (L) fortfahren, die in das übertragene Fernsehsignal eingefügt ist, vor allem Prüfen des Teletext-Signals des übertragenen Fernsehsignals.

5. Identifikations- und Speicherungsvorrichtung von Fernsehstationen gemäß Anspruch 4,
**dadurch gekennzeichnet, dass** die Steuermittel (17) zum Ausführen der Identifikation der Quellen, mit Suchen und Decodieren einer Identifikation (L) fortfahren, die in Zeile 30 des Teletext-Signals des übertragenen Fernsehsignals eingefügt ist.

6. Identifikations- und Speicherungsvorrichtung von Fernsehstationen gemäß Anspruch 5,
**dadurch gekennzeichnet, dass** die Steuermittel (17) zum Ausführen der Identifikation der Quellen, mit Suchen und Decodieren einer Identifikation (L) fortfahren, die in Zeile 0 des Teletext-Signals des übertragenen Fernsehsignals eingefügt ist.

7. Identifikations- und Speicherungsvorrichtung von Fernsehstationen gemäß Anspruch 2 oder 3,
**dadurch gekennzeichnet, dass** die Steuermittel (17) zum Ausführen der Identifikation der Quellen, mit Suchen und Decodieren einer Identifikation (L) fortfahren, die in das übertragene Fernsehsignal gemäß dem Dokument der E.B.U.SPB 459 eingefügt ist.

8. Identifikations- und Speicherungsvorrichtung von Fernsehstationen gemäß Anspruch 7,
**dadurch gekennzeichnet, dass** die Steuermittel (17) zum Ausführen der Identifikation der Quellen, mit Suchen und Decodieren einer Identifikation (L) fortfahren, die in das übertragene Fernsehsignal eingefügt ist, unter Verwendung des so genannten 8/30-Pakets.

9. Identifikations- und Speicherungsvorrichtung von Fernsehstationen gemäß Anspruch 8,
**dadurch gekennzeichnet, dass** die Steuermittel (17) zum Ausführen der Identifikation der Quellen, mit Suchen und Decodieren einer Identifikation (L) fortfahren, die in das übertragene Fernsehsignal eingefügt ist, unter Verwendung des so genannten 8/30-Paketformats 1.

10. Identifikations- und Speicherungsvorrichtung von Fernsehstationen gemäß Anspruch 6,
**dadurch gekennzeichnet, dass** die Steuermittel (17) zum Ausführen der Identifikation der Quellen, mit Suchen und Decodieren einer Identifikation (L) fortfahren, die in eine unterschiedliche Position des empfangenen Fernsehsignals eingefügt ist, insbesondere in Zeile 16, VPS, des übertragenen Fernsehsignals oder in die Position gemäß der Norm EBU-Paket-8/30-Format 2.

11. Identifikations- und Speicherungsvorrichtung von Fernsehstationen gemäß Anspruch 1,
**dadurch gekennzeichnet, dass** die Reihe aufgestellter Speicherung in einem Nur-Lese-Speicher (R), der in der Vorrichtung enthalten ist, enthalten ist.

12. Identifikations- und Speicherungsvorrichtung von Fernsehstationen gemäß Anspruch 11,
**dadurch gekennzeichnet, dass** die Reihe aufgestellter Speicherung eine von einer Anzahl verschiedener Reihen von Speicherung, enthalten in dem Nur-LeseSpeicher (R), ist.

13. Identifikations- und Speicherungsvorrichtung von Fernsehstationen gemäß Anspruch 12,
**dadurch gekennzeichnet, dass** die Reihe aufgestellter Speicherung gewählt ist aus der Anzahl verschiedener Reihen von Speicherung, die in dem Nur-LeseSpeicher (R) enthalten ist, mittels eines geeigneten Befehlsmittels.

14. Identifikations- und Speicherungsvorrichtung von Fernsehstationen gemäß Anspruch 12,
**dadurch gekennzeichnet, dass** die Reihe aufgestellter Speicherung derjenigen entspricht, die für diejenige Zone definiert ist, in welcher die Vorrichtung genutzt wird, des codierten Programmiersystems für Videorekorder.

15. Identifikations- und Speicherungsvorrichtung von Fernsehstationen gemäß Anspruch 6,
**dadurch gekennzeichnet, dass** die Steuermittel (17), nachdem alle Stationen, die eine Identifikation aufweisen, fortfahren, die anderen empfangbaren Stationen zu speichern, in Reihenfolge der Frequenz in den eventuellen Speicherpositionen, die leer bleiben, wobei insbesondere Vorzug denjenigen gegeben wird, die mit Teletext ausgestattet sind.

16. Identifikations- und Speicherungsvorrichtung von Fernsehstationen gemäß Anspruch 6,
**dadurch gekennzeichnet, dass** die Steuermittel (17), nachdem alle Stationen gespeichert worden sind, fortfahren, einen Speicherplan zu erzeugen, zum Anzeigen auf dem Bildschirm auf Anforderung durch den Benutzer.

17. Empfänger von Fernsehsignalen mit einer Identifikations- und Speicherungsvorrichtung von Fernsehstationen gemäß einem oder mehreren der vorherigen Ansprüche.

18. Videorekorder mit einer Identifikations- und Speicherungsvorrichtung von Fernsehstationen gemäß einem oder mehreren der vorherigen Ansprüche 1 bis 16.

## Revendications

1. Dispositif d'identification et de mémorisation de stations de télévision, en particulier pour un récepteur de signaux de télévision, comprenant des moyens de commande (17), qui identifient de façon automatique lesdites stations de télévision et les mémorisent dans un ordre établi, indépendant de la fréquence d'émission de ces stations, **caractérisé en ce que** ledit dispositif comporte une mémoire (R), dans laquelle sont mémorisées une pluralité de règles différentes pour l'identification desdites stations, à savoir format 1 de paquet 8/30 ; format 2 de paquet 8/30; ligne 16-VPS; ligne 0 d'un signal de télétexte, et lesdits moyens formant circuit logique de commande (17) pour l'exécution successivement d'une pluralité de tentatives d'identification, et par
- l'exécution d'une première tentative d'identification pour identifier la station reçue, par recherche et décodage d'une identification (L) insérée dans le signal de télévision, par examen d'une première position déterminée du signal émis, conformément à une première desdites règles mémorisées, et
- lorsque ladite première tentative d'identification n'est pas couronnée de succès, l'exécution d'au moins une seconde tentative d'identification pour identifier ladite station reçue, par recherche et décodage d'une identification insérée dans le signal de télévision, par examen d'une seconde position déterminée du signal émis qui est différente de ladite première position déterminée, conformément à une seconde desdites règles mémorisées.

2. Dispositif d'identification et de mémorisation de stations de télévision selon la revendication 1, **caractérisé en ce qu'**il est prévu des moyens de commande (17) qui, en réponse à une commande spécifique, agissent de manière à :
- faire démarrer une opération de recherche des stations de diffusion pouvant être reçues;
- réaliser le réglage d'accord desdites stations;
- rechercher et décoder une identification (L) insérée dans le signal de télévision émis, par ladite station de diffusion, en examinant une première position déterminée, ligne 30, du signal émis, dans laquelle conformément à une première norme déterminée et mémorisée, SPB 459, SPB 492, ladite identification (L) doit être trouvée;
- vérifier la validité de ladite identification;
- dans le cas d'une réponse affirmative, mémoriser l'information de réglage d'accord de ladite station dans une position déterminée de mémoire réservée pour ladite station d'identification;
- dans le cas d'une réponse négative, rechercher et décoder l'identification en examinant une seconde position déterminée, ligne 0, du signal de télétexte émis, dans laquelle conformément à une seconde norme déterminée, ladite identification (L) doit être trouvée.

3. Dispositif d'identification et de mémorisation de stations de télévision selon la revendication 1, **caractérisé en ce qu'**il est prévu des moyens de commande (17) qui, en réponse à une commande spécifique, agissent de manière à :
- faire démarrer une opération de recherche des stations de diffusion pouvant être reçues;
- réaliser le réglage d'accord desdites stations;
- rechercher et décoder une identification (L) insérée dans le signal de télévision émis, par ladite station de diffusion, en examinant une première position déterminée, ligne 30, du signal émis, dans laquelle conformément à une première norme déterminée et mémorisée, telle que SPB 459, SPB 492, ladite identification (L) doit être trouvée;
- vérifier la validité de ladite identification;
- dans le cas d'une réponse affirmative, mémoriser l'information de réglage d'accord de ladite station dans une position déterminée de mémoire réservée pour ladite station d'identification;
- dans le cas d'une réponse négative, rechercher et décoder l'identification en examinant une seconde position déterminée, ligne 0, du signal de télétexte émis, dans laquelle conformément à une seconde norme déterminée, ladite identification (L) doit être trouvée.

4. Dispositif d'identification et de mémorisation de stations de télévision selon la revendication 2 ou 3, **caractérisé en ce que** lesdits moyens de commande (17) pour l'exécution de l'identification desdites sources, exécutent une recherche et un décodage d'une identification (L) insérée dans le signal de télévision émis, surtout en examinant le signal de télétexte du signal de télévision émis.

5. Dispositif d'identification et de mémorisation de stations de télévision selon la revendication 4, **caractérisé en ce que** pour l'exécution de l'identification desdites sources, lesdits moyens de commande (17) agissent de manière à rechercher et décoder une identification (L) insérée dans la ligne 30 du signal de télétexte du signal de télévision émis.

6. Dispositif d'identification et de mémorisation de stations de télévision selon la revendication 5, **caractérisé en ce que** pour l'exécution de l'identification desdites sources, lesdits moyens de commande (17) agissent en cherchant et en décodant une identification (L) insérée dans la ligne 0 du signal de télétexte du signal de télévision émis.

7. Dispositif d'identification et de mémorisation de stations de télévision selon la revendication 2 ou 3, **caractérisé en ce que** pour effectuer l'identification desdites sources, lesdits moyens de commande (17) agissent en recherchant et en décodant une identification (L) insérée dans le signal de télévision émis, conformément au document de E.B.U. SPB 459.

8. Dispositif d'identification et de mémorisation de stations de télévision selon la revendication 7, **caractérisé en ce que** pour effectuer l'identification desdites sources, lesdits moyens de commande (17) agissent en recherchant et en décodant une identification (L) insérée dans le signal de télévision émis, en utilisant ce qu'on appelle le paquet 8/30.

9. Dispositif d'identification et de mémorisation de stations de télévision selon la revendication 8, **caractérisé en ce que** pour effectuer l'identification desdites sources, lesdits moyens de commande (17) agissent en recherchant et en décodant une identification (L) insérée dans le signal de télévision émis, moyennant l'utilisation de ce qu'on appelle le format 1 du paquet 8/30.

10. Dispositif d'identification et de mémorisation de stations de télévision selon la revendication 6, **caractérisé en ce que** pour effectuer l'identification desdites sources, lesdits moyens de commande (17) agissent de manière à rechercher et décoder une identification (L) insérée dans une position différente du signal de télévision reçu, en particulier dans une ligne 16, VPS, du signal de télévision émis ou dans la position correspondant au format 2 du paquet 8/30 de la norme EBU.

11. Dispositif d'identification et de mémorisation de stations de télévision selon la revendication 1, **caractérisé en ce que** ledit ordre de mémorisation établie est contenu dans une mémoire morte (R) contenue dans le dispositif.

12. Dispositif d'identification et de mémorisation de stations de télévision selon la revendication 11, **caractérisé en ce que** ledit ordre de mémorisation établie est l'un de plusieurs ordres différents de mémorisation, contenus dans ladite mémoire morte (R).

13. Dispositif d'identification et de mémorisation de stations de télévision selon la revendication 12, **caractérisé en ce que** ledit ordre de mémorisation établie est choisi parmi ladite pluralité d'ordres différents de mémorisation, contenus dans ladite mémoire morte (R) à l'aide de moyens de commande appropriés.

14. Dispositif d'identification et de mémorisation de stations de télévision selon la revendication 12, **caractérisé en ce que** ledit ordre de mémorisation établie correspond à celui, qui est défini pour la zone dans laquelle le dispositif est utilisé, du système de programmation codée pour des enregistreurs vidéo.

15. Dispositif d'identification et de mémorisation de stations de télévision selon la revendication 6, **caractérisé en ce qu'**après avoir mémorisé toutes les stations ayant une identification, lesdits moyens de commande effectuent la mémorisation des autres stations pouvant être reçues, dans l'ordre des fréquences, dans les éventuelles positions de mémoire restant vides, en particulier en donnant la préférence à celles pourvues d'un télétexte.

16. Dispositif d'identification et de mémorisation de stations de télévision selon la revendication 6, **caractérisé en ce qu'**après avoir mémorisé toutes les stations, lesdits moyens de commande agissent de manière à créer une carte de mémoire pour un affichage sur l'écran, lorsqu'une demande est faite par l'utilisateur.

17. Récepteur de signaux de télévision comprenant un dispositif d'identification et de mémorisation de stations de télévision, selon une ou plusieurs des revendications précédentes.

18. Enregistreur vidéo comprenant un dispositif d'identification et de mémorisation de stations de télévision, selon une ou plusieurs des revendications précédentes 1 à 16.
